# EUROPÄISCHE PATENTSCHRIFT

(11) **EP 1 924 540 B1**
(45) Veröffentlichungstag und Bekanntmachung des Hinweises auf die Patenterteilung: **03.07.2013**
(21) Anmeldenummer: 06778267.2
(22) Anmeldetag: 17.08.2006
(51) Int. Cl.: C07B 57/00, C07C 51/43, C07C 59/50, C01D 9/00

(54) **VERFAHREN ZUR TRENNUNG VERBINDUNGSBILDENDER CHIRALER SYSTEME**
METHOD FOR SEPARATING COMPOUND-FORMING CHIRAL SYSTEMS
PROCEDE DE SEPARATION DE SYSTEMES CHIRAUX GENERATEURS DE COMPOSES

(30) Priorität: 20.08.2005 DE 102005039501
(43) Veröffentlichungstag der Anmeldung: 28.05.2008
(73) Patentinhaber: Max-Planck-Gesellschaft zur Förderung der Wissenschaften e.V., 80539 München (DE)
(72) Erfinder: SEIDEL-MORGENSTERN, Andreas, 39114 Magdeburg (DE); LORENZ, Heike, 39106 Magdeburg (DE); POLENSKE, Daniel, 39435 Egeln (DE)
(74) Vertreter: Hannke, Christian
(86) Internationale Anmeldenummer: PCT/EP2006/065413
(87) Internationale Veröffentlichungsnummer: WO 2007/023129

(56) Entgegenhaltungen:
- EP-A1- 0 220 435
- WO-A-95/08522
- JP-A- 60 202 853
- US-A- 5 260 482
- DANIEL POLENSKE ET AL: "Alternative Einsatzmöglichkeiten der "Bevorzugten Kristallisation" zur Enantiomerentrennung" CHEMIE INGENIEUR TECHNIK, Bd. 78, Nr. 8, 2006, Seiten 1101-1110, XP002417135
- M.P. ELSNER ET AL: "Experimental Study and Simplified Mathematical Description of Preferential Crystallization" CHIRALITY, Bd. 17, Nr. S1, 2005, Seiten 183-195, XP002417136
- A. PERLBERG ET AL: "Crystal Growth Kinetics via Isothermal Seeded Batch Crystallization: Evaluation of Measurement Techniques and Application to Mandelic Acid in Water" IND.ENG.CHEM.RES., Bd. 44, Nr. 4, 2005, Seiten 1012-1020, XP002417137
- H. LORENZ ET AL: "Enantiomeric Mandelic Acid System - Melting Point Phase Diagram and Solubility in Water" J.CHEM.ENG.DATA, Bd. 47, Nr. 5, 2002, Seiten 1280-1284, XP002417138
- A.A.RODRIGO ET AL: "Online Monitoring of Preferential Crystallization of Enantiomers" CHIRALITY, Bd. 16, 2004, Seiten 499-508, XP002417139

## Beschreibung

Die vorliegende Erfindung bezieht sich auf ein Verfahren zur Racemattrennung bei verbindungsbildenden Systemen. Unter einem Racemat versteht man ein äquimolares Gemisch aus zwei Enantiomeren. Enantiomere sind Isomere, also Stoffe die sich nicht in der Summenformel sondern nur in der Anordnung der Atome unterscheiden. Bei Enantiomeren liegt der Unterschied in der Chiralität, d.h. in der Eigenschaft, sich wie Bild und Spiegelbild zueinander zu verhalten.

Eine Trennung dieser racemischen Gemische, die in folgendem als Racemattrennung bezeichnet wird, ist gewöhnlich schwierig, da die chemischen und physikalischen Eigenschaften der Enantiomere mit Ausnahme ihres Verhaltens gegenüber linear polarisiertem Licht und anderen chiralen Substanzen identisch sind.

Viele pharmazeutische Wirkstoffe sind chiral. Häufig kann jedoch nur eines der beiden Enantiomere als Wirkstoff verwendet werden, da sich die physiologischen Wirkungen der Enantiomere auf den menschlichen Organismus in der Regel voneinander unterscheiden. Daneben kommt der Gewinnung reiner Enantiomere auch in der Agrochemie und der Lebensmittelindustrie hohe Bedeutung zu. Der Markt für enantiomerenreine Substanzen (in pharmazeutischen Wirkstoffen, Pflanzenschutzmitteln, Farb- und Geruchsstoffen) ist in den letzten Jahren deutlich angestiegen.

Eine aus dem Stand der Technik bekannte Methode der Racemattrennung ist die sogenannte bevorzugte Kristallisation Comprehensive Supramolecular Chemistry, Elsevier 1996 Vol. 10, S. 117; EP 0 220 435 und JP 60 202 853. Dieses Verfahren kann jedoch nach dem Stand der Technik ausschließlich für sogenannte konglomeratbildende Stoffsysteme angewandt werden, d. h. für solche Systeme, bei denen die Enantiomere in der festen Phase unmischbar sind. Hingegen kann die bevorzugte Kristallisation bisher nicht bei den wesentlich häufiger vorkommenden verbindungsbildenden Stoffsystemen eingesetzt werden Chemie Ingenieur Technik 2006, 78, No. 8 1101-1110.

Nur etwa 5 -10% aller chiralen Systeme sind konglomeratbildende Systeme wohingegen die Mehrheit der übrigen Systeme verbindungsbildende Systeme sind. Diese Systeme können aus thermodynamischen Gründen nicht ausgehend vom Racemat mittels der bevorzugten Krisallisation getrennt werden.

Aus dem Stand der Technik sind weitere Möglichkeiten der Racemattrennung bekannt. Zu diesen Möglichkeiten zählen z. B. chemische Verfahren, bei denen zunächst Diasteromere gebildet werden, biochemische Verfahren, d. h. Verfahren, die mit Hilfe von Mikroorganismen oder Enzymen ablaufen, oder chromatographische Methoden. Generell bietet die bevorzugte Kristallisation gegenüber den genannten Verfahren Vorteile.

Der vorliegenden Erfindung liegt daher die Aufgabe zugrunde, ein Verfahren zur Racemattrennung verbindungsbildender chiraler Systeme zur Verfügung zu stellen, welches gegenüber dem Stand der Technik einfacher abläuft. Eine weitere Aufgabe besteht darin, ein Verfahren zur Verfügung zu stellen, welches die aus dem Stand der Technik bekannte Methode der bevorzugten Kristallisation, die selbst ein einfaches und kostengünstiges Verfahren darstellt, einsetzt.

Dies wird erfindungsgemäß durch ein Verfahren nach Anspruch 1 erreicht. Vorteilhafte Weiterbildungen des Verfahrens sind Gegenstand der Unteransprüche.

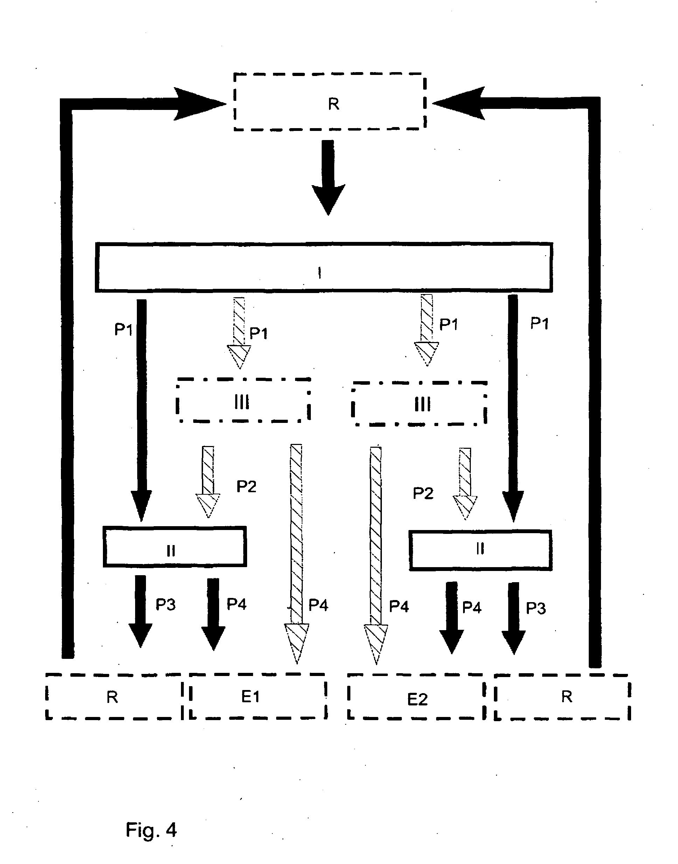

Bei dem erfindungsgemäßen Verfahren 1 (Fig. 4) wird von einem racemischen Gemisch ausgegangen, welches bei der chemischen Synthese als Zielprodukt entsteht. In dem ersten Verfahrensschritt wird das Racemat durch einen Anreicherungsschritt in wenigstens eine angereicherte Fraktion aufgetrennt. In einem weiteren Verfahrenschritt, der bevorzugten Kristallisation, wird aus der oder den angereicherten Fraktion(en) das Zielenantiomer und/oder Racemat gewonnen. Das Racemat kann dem ersten Verfahrensschritt als Ausgangstoff rückgeführt werden. Damit kann das Racemat über einen zyklischen Prozess in die beiden Enantiomere gespalten werden. Es fallen keinerlei Nebenprodukte an.

Alternativ zu diesem Verfahren kann ein zweites, komplexeres Verfahren vorgeschlagen werden. In diesem Fall wird zwischen den beiden oben vorgestellten Verfahrensschritten des Verfahrens ein weiterer Verfahrensschritt eingebaut, die sogenannte (klassische) enantioselektive Kristallisation. Mit der enantioselektiven Kristallisation können größere Enantiomerenüberschüsse selektiv auskristallisiert werden. Die Notwendigkeit dieses Verfahrensschrittes ist abhängig vom ersten Verfahrensschritt und vom Phasendiagramm der chiralen Substanz. Die am Ende der enantioselektiven Kristallisation verbleibenden Mutterlaugen enthalten die Enantiomere dann jeweils in eutektischer Zusammensetzung. Bei diesem modifizierten Verfahren wird in den Verfahrensschritten II und III wenigstens eines der beiden Zielenantiomere gewonnen; des weiteren fällt im Verfahrensschritt II analog zum Verfahren 1 Racemat als Nebenprodukt an, welches im Verfahrensschritt I als Ausgangstoff verwendet werden kann.

Damit wird erfindungsgemäß ein Hybridprozess vorgeschlagen, der einerseits einen Anreicherungsschritt und andererseits den Schritt der bevorzugten Kristallisation enthält. Der Grund dafür liegt darin, dass, wie oben erwähnt, die verbindungsbildenden Stoffsysteme nicht ausgehend vom Racemat mittels bevorzugter Krisallisation getrennt werden können. Falls eine enantiomere Anreicherung in dem zu trennenden Gemisch vorliegt, die der eutektischen Zusammensetzung entspricht beziehungsweise diese sogar überschreitet, kann das Verfahrensprinzip der bevorzugten Kristallisation zur Gewinnung des gewünschten Enantiomeres eingesetzt werden.

Die Erzeugung der angereicherten Fraktion erfolgt vorzugsweise durch ein chromatographisches Verfahren. Ein chromatographisches Verfahren erlaubt die Auftrennung eines Stoffgemisches, da sich ein Verteilungsgewicht zwischen einer stationären und einer mobilen Phase einstellt. Die Erzeugung der angereicherten Fraktion erfolgt bei einer anderen bevorzugten Variante unter Einsatz einer enantioselektiven Membran. Derartige Membranen erlauben den Durchtritt eines Enantiomers während sie den Durchtritt des anderen Enantiomers verhindern bzw. vermindern und auf diese Weise werden die jeweiligen angereicherten Fraktionen erzeugt. Die Erzeugung der angereicherten Fraktion erfolgt vorzugsweise bei einem Kristallisationsprozess unter Einsatz von supramolekularen Komplexen. Die Trennung erfolgt dabei nach dem bekannten Gast-Wirt-Prinzip.

Durch die Anreicherung entstehen gewöhnlich zwei angereicherte Fraktionen, wobei eine Fraktion mit einem Enantiomer E1 und die andere mit einem Enantiomer E2 oberhalb der eutektischen Zusammensetzung angereichert ist. Diese Enantiomerenüberschüsse können selektiv kristallisiert werden, wobei die am Ende der Kristallisationsprozesse verbleibenden Mutterlaugen die Enantiomere jeweils in eutektischer Zusammensetzung enthalten.

Bei der bevorzugten Kristallisation werden während eines Verfahrensschritts aus einer enantiomer angereicherten untereutektischen, eutektischen oder übereutektischen Mischung eines Enantiomers und des Racemats zyklisch das gewünschte Enantiomer und Racemat kristallisiert und jeweils als Feststoff abgetrennt. Dabei wird die angereicherte Fraktion mit dem abzutrennenden Enantiomer oder dem Racemat geimpft, um auf diese Weise die bevorzugte Kristallisation in Gang zu setzen. Bei der bevorzugten Kristallisation wird nach dem Impfen mit den entsprechenden Saatkristallen ausschließlich das gewünschte Enantiomer oder Racemat kristallisiert.

Das in dem Prozess entstehende Racemat wird vorzugsweise wieder der racemischen Mischung zugeführt welches im Anreicherungsschritt (Verfahrensschritt I) benötigt wird.

Auf diese Weise kann ein insgesamt zyklischer Prozess durchgeführt werden.

Die bevorzugte Kristallisation wird abgebrochen, wenn die Keimbildung des jeweils unerwünschten Racemats oder Enantiomers auftritt. Dabei ist zu beachten, dass zumindest in der Anfangsphase der bevorzugten Kristallisation überwiegend bzw. nur das gewünschte Enantiomer oder Racemat entsteht.

Einzelne Verfahrensschritte und insbesondere der Verfahrensschritt der bevorzugten Kristallisation werden vorzugsweise im Wesentlichen kontinuierlich überwacht. Für eine sichere Führung der beschriebenen Kristallisationsprozesse ist eine leistungsfähige Analytik d. h: eine kontinuierliche Überwachung empfehlenswert. Die Überwachung der einzelnen Verfahrensschritte erfolgt durch ein Verfahren, das aus einer Gruppe von Verfahren ausgewählt ist, welche polarimetrische Messungen, Dichtemessungen, refraktrometrische Messungen und dergleichen sowie Kombination aus diesen Verfahren enthält. Durch diese Überwachungsverfahren kann beispielsweise festgestellt werden, an welchem Zeitpunkt die Kristallisation des gewünschten Enantiomers abgebrochen werden muss.

Weitere Vorteile und Ausführungsformen ergeben sich aus den beigefügten Zeichnungen:

Darin zeigen:
- Fig. 1a: ein ternäres Phasendiagramm eines konglomeratbildenden Systems.
- Fig. 1b: ein ternäres Phasendiagramm eines verbindungsbildenden Systems
- Fig. 2: ein Phasendiagramm eines verbindungsbildenden Systems für einen Batch-Prozess.
- Fig. 3: ein Phasendiagramm eines verbindungsbildenden Systems für einen zyklischen Prozess; und
- Fig. 4: ein Blockdiagramm eines erfindungsgemäßen Hybridprozesses;
- Fig. 5: zeigt ein quasi-binäres Phasendiagramm zur Darstellung der Gewinnung von reinem Enantiomer mittels bevorzugter Kristallisation am Beispiel des Systems Mandelsäure/Wasser; und
- Fig. 6: zeigt ein quasi-binäres Phasendiagramm zu Veranschaulichung eines zyklischen Prozesses am Beispiel des Systems Mandelsäure/Wasser.

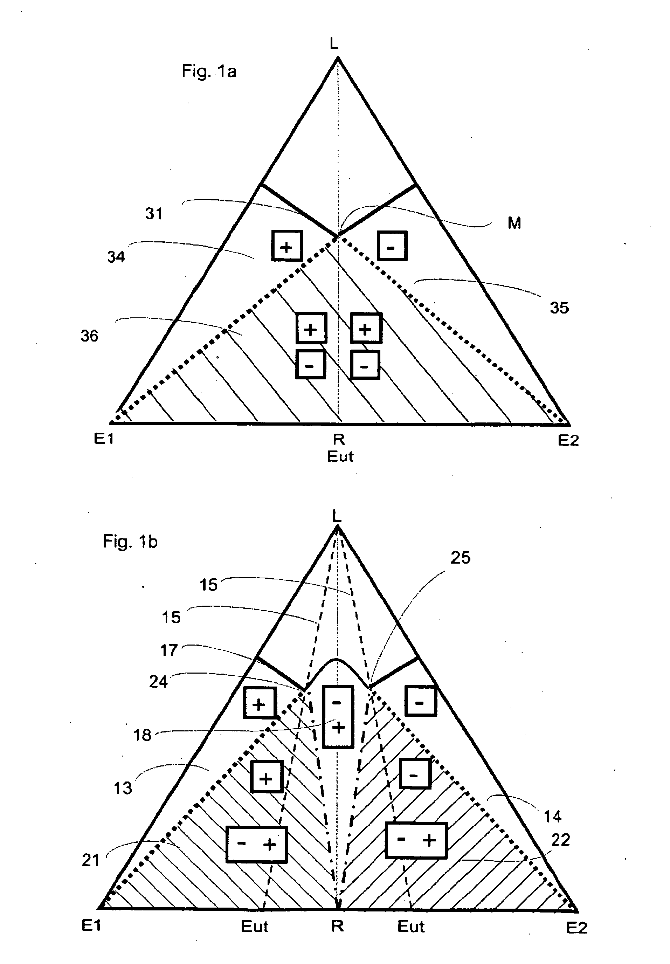

Eine wichtige Voraussetzung für die kristallisationsbasierte Trennung in ternären Stoffsystemen ist die Kenntnis der zugehörigen Fest-flüssig-Phasengleichgewichte. Im Fall der hier gegenständigen chiralen Systeme sind dabei insbesondere zwei Arten von Phasendiagrammen von Bedeutung, nämlich einerseits die sogenannten konglomeratbildenden Systeme, wie beispielsweise Threonin/Wasser, und andererseits die verbindungsbildenden Stoffsysteme, wie Mandelsäure/Wasser. Zur Veranschaulichung sind in Fig. 1a ein ternäres Phasendiagramm für konglomeratbildende und in Fig. 1 b eines für verbindungsbildende Stoffsysteme dargestellt.

Die Löslichkeitsisotherme 31 für konglomeratbildende Stoffsysteme weist im ternären Phasendiagramm bei der racemischen Zusammensetzung eine maximale Löslichkeit auf, die durch den Punkt M gekennzeichnet ist. Dabei entspricht das Racemat dem eutektischen Mischungsverhältnis der Enantiomere, was durch das Kürzel Eut gekennzeichnet ist. Wie in Fig. 1a gezeigt, kann das Gebiet unterhalb der Löslichkeitsisiothermen in drei weitere Phasengebiete unterteilt werden nämlich in zwei Zweiphasengebiete 34, 35 und ein Dreiphasengebiet 36. Für die bevorzugte Kristallisation ist hier nur das Dreiphasengebiet 36 von Interesse.

Fig. 1b zeigt das Phasendiagramm eines verbindungsbildenden Systems. Die gestrichelt eingezeichneten Linien 15, die von den binären eutektischen Zusammensetzungen (Eut) zum oberen Eckpunkt des Dreiecksdiagramms (Lösungsmittel L) verlaufen, zeigen die sogenannten eutektischen Linien. Das Bezugszeichen R auf der Grundseite des Diagramms kennzeichnet die racemische Zusammensetzung. Die Löslichkeitsisotherme 17 verbindungsbildender chiraler Systeme weist 5 markante Löslichkeitspunkte auf (Enantiomer, Racemat und 2 Eutektika).

Verbindungsbildende Stoffsysteme sind dadurch charakterisiert, dass bei der racemischen Zusammensetzung eine intermediäre Verbindung (eine racemische Verbindung) gebildet wird, und somit auf den beiden Seiten der racemischen Verbindung jeweils an den Schnittpunkten der Löslichkeitskurven von Enantiomer und Racemat 24, 25 maximale Löslichkeiten auftreten. Aufgrund der Besonderheit, dass eine intermediäre Verbindung entsteht, kann das Gebiet unterhalb der Löslichkeitsisiotherme in insgesamt fünf Phasengebiete eingeteilt werden, nämlich drei Zweiphasengebiete 13, 14, 18 und zwei Dreiphasengebiete. Die Dreiphasengebiete, die in Fig. 1b mit dem Bezugszeichen 21 und 22 versehen sind und jeweils bestimmt werden durch den Eckpunkt E1 bzw. E2, den Punkt R sowie die Punkte 24 und 25, zeichnen sich durch die Existenz einer gesättigten Lösung, Kristallen der Verbindung und eines der beiden Enantiomeren aus, also im Falle des Gebiets 21 des Enantiomers E1 und im Falle des Gebiets 22 des Enantiomers E2. Diese Bereiche sind für die bevorzugte Kristallisation von Interesse, da Enantiomer E1 bzw. E2 aus der Lösung gewonnen werden kann.

Die Zusammensetzung der Enantiomere am Punkt der jeweils maximalen Löslichkeit ist im ternären Phasendiagramm substanzspezifisch sowie lösungsmittel- und temperaturabhängig. Häufig entspricht die Zusammensetzung dem eutektischen Mischungsverhältnis im chiralen binären System d. h. es bildet sich eine eutektische Linie.

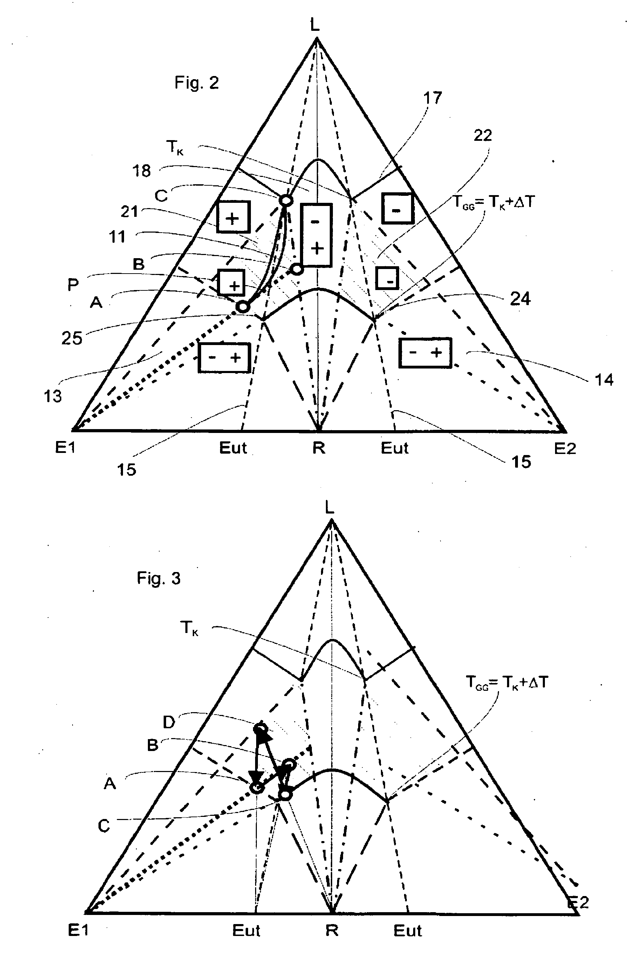

Unter Bezugnahme auf Fig. 2 wird das Prinzip der bevorzugten Kristallisation der absatzweisen Kristallisation eines verbindungsbildenden Stoffsystems beschrieben. Zu Beginn der Kristallisation, der hier durch den Punkt A gekennzeichnet ist, liegt eine gesättigte Lösung bei T_{GG} vor. Diese kann durch die eingangs erwähnten Anreicherungsschritte hergestellt werden. Diese gesättigte Lösung kann eine eutektische Mischung der beiden Enantiomere sein oder einen enantiomeren Überschuss aufweisen wie zum Beispiel bei Punkt A in Fig. 2.

Durch Abkühlung der Lösung wird nun eine Übersättigung erzeugt. Dabei ist der Grad der Unterkühlung AT so zu wählen, dass der Punkt A innerhalb der Breite des metastabilen Bereichs 21 (grau, gepunktet) verbleibt. Auf diese Weise kann eine spontane Keimbildung vermieden werden. Im Fall dieser spontanen Keimbildung würde keine Trennung erfolgen.

Wird die derart übersättigte Lösung mit Kristallen eines Enantiomers wie im Falle des Punktes A dem Enantiomer E1 geimpft, so würde die Kristallisation im Idealfall der alleinigen Kristallisation des Enantiomers E1 entlang der Linie A→B verlaufen. Tatsächlich verläuft jedoch der Prozess nicht auf der Linie A→B, sondern auf der gekrümmten Linie A→C. Die ideale Asymptote in dieser gekrümmten Linie A→C wird durch die Gerade A→B dargestellt. Wie in der Linie bzw. Trajektorie 11 zu erkennen ist, verläuft zumindest in der Anfangsphase die Kristallisation noch entlang der Linie A→B d. h. in dieser Anfangsphase kristallisiert bevorzugt das Enantiomer E1 aus, während die racemische Verbindung R in Lösung bleibt. Ab einem gewissen Zeitpunkt weicht die gekrümmte Linie 11 immer weiter von der Idealasymptote A-B ab, was bedeutet, dass nun auch das Racemat kristallisiert.

Die Tatsache, dass bis zu einen bestimmten Zeitpunkt im Wesentlichen lediglich das Enantiomer kristallisiert, wird bei der Enantiomerentrennung ausgenutzt. Genauer wird die Kristallisation abgebrochen, wenn die Linie A→C zu stark von der idealen Linie A→B abzuweichen beginnt. Daher ist für diesen Prozess eine permanente Prozessüberwachung notwendig, um festzustellen, an welchem Stadium sich der Prozess befindet.

Entsprechend könnte auf der rechten Seite des Diagramms das Enantiomer E2 entlang einer entsprechenden Bahn kristallisiert werden.

T_{GG} bezeichnet die Gleichgewichtstemperatur und T_{K} die Kristallisationstemperatur.

Fig. 3 veranschaulicht in einem weiteren Dreiphasendiagramm einen zyklischen Prozess der aus der oben beschriebenen absatzweisen Kristallisation entwickelt werden kann. Dabei werden in einem vollständigen Zyklus zwei absatzweise Kristallisationsschritte durchgeführt. Der erste Arbeitsschritt (A→B) entspricht dem Batch-Prozess, der in Fig. 2 dargestellt ist. Bevor mit dem zweiten Abschnitt begonnen werden kann, muss jedoch eutektische Mischung als Ausgangsstoff bzw. Feed hinzugegeben werden (B→C).

Zu Beginn des zweiten Arbeitsschrittes von Punkt C zu Punkt D wird mit Kristallen des Racemats geimpft. An den jeweiligen Zielpunkten B und D wird jeweils Kristallisat abgetrennt d. h. im Falle von Punkt B Enantiomer E1 und im Fall von Punkt D Racemat. Zusätzlich wird bevorzugt jeweils eutektische Mischung als Ausgangsstoff bzw. Feed hinzugegeben.

Damit kann insgesamt durch diesen zyklischen Prozess ein Enantiomer E1 und Racemat zyklisch aus der eutektischen Mischung gewonnen werden. Wie oben erwähnt, kann die enantiomere Anreicherung des Ausgangsstoffes bzw. Feed der bevorzugten Kristallisation auch die eutektische Zusammensetzung überschreiten.

Fig. 4 veranschaulicht in einem Blockdiagramm das mögliche erfindungsgemäße Verfahren. Ausgehend von einem Racemat R wird ein Anreicherungsschritt I durchgeführt wie beispielsweise die oben beschriebene Chromatographie. Der Anreicherungsschritt führt einerseits zu einer angereicherten Lösung mit Enantiomer E1 auf der linken Seite entlang des linken Pfeils P1 und auf der rechten Seite entlang des rechten Pfeils P1 zu einer mit Enantiomer E2 angereicherten Lösung. Anschließend wird die Lösung beispielsweise durch Verdampfen übersättigt.

Im zweiten Verfahrenschritt (II), der bevorzugten Kristallisation, wird aus den angereicherten Fraktionen das Zielenantiomer entlang P4 und Racemat entlang P3 gewonnen. Alternativ dazu kann vor dem Verfahrenschritt II (der bevorzugten Kristallisation) eine enantioselektive Kristallisation (III) durchgeführt werden.

Die am Ende der enantioselektiven Kristallisation verbleibenden Mutterlaugen enthalten die Enantiomere jeweils in eutektischer Zusammensetzung (P2), und können mit dem beschriebenen Prozess der bevorzugten Kristallisation aufgearbeitet werden, womit es möglich ist, die reinen Enantiomere und das Racemat zu gewinnen, wie durch die jeweiligen Pfeile P4 und P3 veranschaulicht. Das Racemat kann wieder zum Anfangsschritt der Anreicherung beispielsweise der chromatographischen Anreicherung zurückgeführt werden.

Wie Eingangs erwähnt, liegt der Vorteil des erfindungsgemäßen Verfahrens darin, dass auch die kristallisationsbasierte Gewinnung reiner Enantiomere in verbindungsbildenden Systemen möglich ist. Damit sind neben den bisher 5 -10% konglomeratbildenden Systemen auch die verbleibenden 90 - 95% der chiralen Substanzen einer einfachen und kostengünstigen kristallisationsbasierten Enantiomerentrennung zugängig. Auch ist unter Umständen eine Anwendung des Verfahrens auf die sehr selten vorkommenden Systeme mit vollständiger Mischbarkeit in der festen Phase möglich.

Im Fall von Mischkristallbildung ist im kristallisationsbasierten Trennverfahren generell nur eine begrenzte Reinheit erreichbar. Der Einsatz des erfindungsgemäßen Verfahrens ist damit von der zu erzielenden Reinheit, die sich beispielsweise aus den Reinheitsanforderungen seitens der Industrie ergibt, abhängig und entsprechend zu prüfen.

Am Ende des gekoppelten Hybridprozesses fallen keinerlei Restmutterlaugen an. Wie im Falle der direkten Kristallisation konglomeratbildender chiraler Systeme kann das Racemat in die beiden Enantiomere gespalten werden.

Neben dem hier beschriebenen neuartigen Verfahren kann die beschriebene bevorzugte Kristallisation in entsprechender Weise auch zur Aufarbeitung eutektischer Mutterlaugen (aus der Lösung und Schmelze) eingesetzt werden, wodurch sich ein erhebliches ökonomisches Potential ergibt. Eutektische Restmutterlaugen fallen beispielsweise bei der herkömmlichen enantioselektiven Kristallisation verbindungsbildender Stoffsysteme an. Sie enthalten das Zielenantiomer noch in gewisser Anreicherung, was eine Weiterverarbeitung interessant macht und eine entsprechende Erhöhung der Produktausbeute bzw. Produktivität erlaubt.

Die Experimente wurden in einer 1,2 Liter temperaturgesteuerten Kristallisationseinrichtung mit Mandelsäure in Wasser durchgeführt. Die Temperatur wurde durch ein PT 100 Widerstandsthermometer überprüft. Die kristallfreie Lösung die unter Zuhilfenahme eines Standard HPLC Filters separiert worden war, wurde aus der Kristallisationseinrichtung mittels einer Zirkulationspumpe gepumpt. Fließende Lösung wurde mittels Polarimeter und Dichtemessgerät analysiert. Hinter dieser Testvorrichtung wurde die Lösung zurück in die Kristallisationseinrichtung mittels eines isolierten Kanals geschickt.

Die Kristallisationsbedingungen wurden entsprechend den Anforderungen zur Durchführung der bevorzugten Kristallisation ausgewählt wobei die Kristallisationstemperaturen zwischen 10 - 30°C lagen, die Masse der Impfkristalle im Bereich von 2500 Milligramm und die Masse an Lösung im Bereich von 1000 g. Die Rührgeschwindigkeit lag im Bereich zwischen 300 und 400 Umdrehungen pro Minute.

Die Experimente wurden mit unterschiedlichen Anfangsgehalten an Enantiomeren durchgeführt. Ein Durchgang wurde mit der Lösungszusammensetzung zwischen der racemischen Verbindung und der eutektischen Linie durchgeführt, ein zweiter Durchgang auf der eutektischen Linie und ein dritter Durchgang in einer Zusammensetzung zwischen der eutektischen Linie und dem Enantiomer. Als Impfkristalle wurde die racemische Verbindung verwendet. Im ersten Fall kristallisiert, wie aus dem Prinzip der bevorzugten Kristallisation zu erwarten, die racemische Verbindung nach dem Impfen und die eutektischen Linie wird überschritten.

Der zweite Durchgang führte zum gleichen Ergebnis, wobei die racemische Komponente oberhalb der eutektischen Linie kristallisiert. Auch im oben erwähnten dritten Fall, in dem der Startpunkt auf der Seite im Phasendiagramm angeordnet ist, in dem das Enantiomer bevorzugt kristallisieren würde, wird eine racemische Verbindung als feste Phase nach dem Impfen erreicht. Dabei sind mehr oder weniger starke chirale Wechselwirkungen in der übersättigten Lösung verantwortlich für diese Ergebnisse.

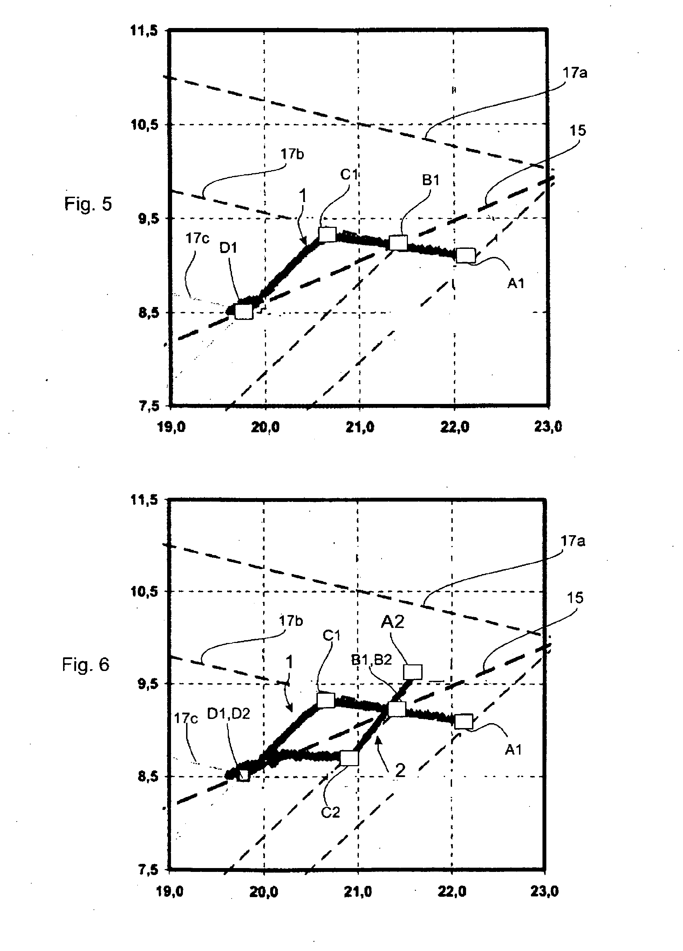

Die bisher dargestellten Beispiele zeigen die Gewinnung racemischer Mandelsäure aus Lösungen mit nahezu eutektischer Zusammensetzung der Enantiomere (d.h. untereutektisch, eutektisch oder übereutektisch). In den Figuren 5 und 6 sind Diagramme dargestellt, die auch die Möglichkeit der Gewinnung von reinem Enantiomer aus entsprechend zusammengesetzten Mutterlaugen zeigen.

Figur 5 zeigt ein quasi-binäres Phasendiagramm zur Bestätigung der technischen Durchführbarkeit für die Gewinnung von reinem Enantiomer mittels bevorzugter Kristallisation an dem Beispiel des Systems Mandelsäure/Wasser. Dabei wird auf der Abzisse der Massenanteil von (S)-Mandelsäure in Gramm pro 100g.-Lösung dargestellt. Auf der Kordinate wird der Massenanteil von (R)-Mandelsäure ebenfalls in der Einheit g. pro 100g.-Lösung veranschaulicht. Figur 5 zeigt daher ein Experiment, bei dem die Machbarkeit der Gewinnung von reinem Enantiomer aus einer Lösung mit nahezu eutektischer Zusammensetzung gezeigt wird.

In Figur 5 bezieht sich das Bezugszeichen 15 wiederum auf die eutektische Linie und die Linien 17a, 17b und 17c zeigen Löslichkeitisothermen bei 30°C beziehungsweise 29°C und 28°C. Bei dem in Figur 5 dargestellten Experiment am Beispiel des Stoffsystems Mandelsäure/Wasser wurde eine 60ml temperaturgesteuerte Kristallisationseinrichtung verwendet. Die Prozessüberwachung erfolgte in der oben beschriebenen Art. Die Kristallisationstemperatur war 28°C und die Masse an Lösung betrug 50g.. Die Rührgeschwindigkeit betrug 400 Umdrehungen pro Minute und die Menge an Impfkristallen lag bei 0,125g. Dabei wurde mit dem Enantiomer geimpft. Die Übersättigung lag bei 3,3 g./100g. Lösung und der Enantiomerenüberschuss bei 41,5%.

Die Bezugszeichen A1, B1, C1 und D1 beziehen sich auf Prozesspunkte.

Zu Beginn des in Figur 5 gezeigten Experiments lag, wie gesagt, eine übersättigte Lösung (Δ c = 3,3g./100g.-Lösung) mit einem Enantiomerenüberschuss von 41,5% an (S)-Mandelsäure vor. Dies ist durch den Punkt A1 veranschaulicht. Nach dem Impfen mit (S)-Mandelsäure-Saatkristallen kristallisiert bevorzugt (S)-Mandelsäure aus und der Kristallisationspfad in dem in Figur 5 gezeigten quasi-binären Phasendiagramm überschreitet die eutektische Linie 15. Dies ist in Punkt B1 veranschaulicht, in dem der Enantiomerenüberschuss 40% beträgt.

Im weiteren Verlauf bis zum Punkt C1 kristallisiert reines Enantiomer und der Enantiomerenüberschuss sinkt auf ca. 37,9%. An diesem Prozesspunkt C1 kommt es zur Keimbildung des unerwünschten Racemats. Wird der Kristallisationsprozess an dieser Stelle nicht abgebrochen, zeichnet sich der weitere Kristallisationsverlauf zwischen den Prozesspunkten C1 und der D1 durch eine simultane Kristallisation von (S)-und (RS)-Mandelsäurekristallen aus. In diesem Fall dominiert die Kristallisation des Racemats.

Der Punkt D1 entspricht dem thermodynamischen Gleichgewicht, hier ist der Kristallisationsprozess beendet.

Damit wurden auch hier die Experimente mit einer Lösungszusammensetzung zwischen der eutektischen Linie 15 und dem Enantiomer durchgeführt, wobei ebenfalls Kristalle des Enantiomers verwendet wurden. Das Enantiomer kristallisiert nach dem Impfen und die eutektische Linie wird überschritten, wie es nach dem Prinzip der bevorzugten Kristallisation zu erwarten ist.

Figur 6 zeigt ein quasi-binäres Phasendiagramm zur Veranschaulichung eines zyklischen Prozesses. Dabei ist ein Prozess mit zwei Versuchsdurchgängen 1 und 2 veranschaulicht, wobei Durchgang 1 durch die Bezugszeichen A1, B1, C1 und D1 entsprechend Figur 5 dargestellt ist und Durchgang 2 durch die Bezugszeichen A2, B2, C2, D2. Der erste Durchgang wurde, wie in Figur 5 gezeigt, mit einer Lösungszusammensetzung zwischen eutektischer Linie und Enantiomer durchgeführt, wobei wiederum Impkristalle des Enantiomers verwendet wurden. Im Ergebnis kristallisiert das Enantiomer nach dem Impfen und die eutektische Linie wird überschritten, wie für die bevorzugte Kristallisation zu erwarten ist.

Im zweiten Durchgang 2 wurden mit einer übersättigten Lösung (Δ c = 3,3 g./ 100g. Lösung) mit einem Enantiomerenüberschuss von 38,5 % an (S) - Mandelsäure begonnen. Dies wird durch den Prozesspunkt A2 angezeigt. Nach dem Impfen mit Kristallen des Racemats kristallisiert die Verbindung bis zum Erreichen des Wendepunkts der Trajektorie, was durch den Prozesspunkt C2 dargestellt ist. An dieser Stelle beträgt der Enantiomerenüberschuss ca. 41,8 %.

Auch in diesem Durchgang wird die eutektische Linie analog zum oben dargestellten ersten Durchgang überschritten, was durch den Punkt B2 gezeigt ist. Wird der Kristallisationsprozess im Prozesspunkt C2 nicht abgebrochen, so kristallisieren im weiteren Kristallisationsverlauf, d.h. zwischen den Prozesspunkten C2 und D2, das Enantiomer und das Racemat simultan, wobei die Kristallisation des Enantiomers zu Beginn dominiert. Entsprechend dem in Figur 5 gezeigten Versuch wird das thermodynamische Gleichgewicht bei einem Enantiomerenüberschuss von ca. 40 % erreicht, was durch den Prozesspunkt D2 veranschaulicht ist.

Damit wurde in dem zweiten Durchgang 2 die Kristallisation mit einer Lösungszusammensetzung zwischen der racemischen Verbindung und der eutektischen Linie durchgeführt, wobei hier das Racemat nach dem Impfen mit Kristallen der racemischen Verbindung kristallisiert und die eutektische Linie überschritten wird, wie es für das Prinzip der bevorzugten Kristallisation zu erwarten ist.

Zusammenfassend wird bei dem erfindungsgemäßen Verfahren eine selektive Kristallisation trotz thermodynamischer Limitierung durchgeführt. Die erfindungsgemäße Methode beruht auf der unterschiedlichen Kristallisationsgeschwindigkeit des Enantiomers und der racemischen Verbindung in einer übersättigten Lösung in Gegenwart von Impfkristallen dieses Enantiomers oder der racemischen Verbindung, d.h. es ist eine kinetisch getriebene Trennung. Die Anwendung des erfindungsgemäßen Verfahrens auf verbindungsbildende Systeme erlaubt die Aufarbeitung der oben genannten Restmutterlaugen und verhindert den Verlust von Wertstoff. Dahingegen wird bei der klassischen enantioselektiven Kristallisation nur der Überschuss eines Enantiomers bis an die eutektische Zusammensetzung gewonnen (thermodynamische Limitierung), d.h. es verbleibt stets eine Restmutterlauge, die die Enantiomeren in eutektischer Zusammensetzung enthält.

Mit dem erfindungsgemäßen Verfahren werden daher chirale Systeme aus einem Lösungsmittel, d.h. im ternären System getrennt. Dabei ist der Ausgangspunkt eine Lösung, die die beiden Enantiomere in eutektischer oder übereutektischer Zusammensetzung enthält.

Thermodynamisch liegt insoweit keine "Lösung mit eutektischer Zusammensetzung oder eutektische Mischung" vor. Die Untersuchungen der Anmelder haben darüber hinaus gezeigt, dass die bevorzugte Kristallisation im verbindungsbildenden System der Mandelsäure auch aus Lösungen, die die beiden Enantiomere in untereutektischer Zusammensetzung enthalten, möglich ist. Mit anderen Worten kann die bevorzugte Kristallisation auch bei einer enantiomeren Anreicherung unterhalb der eutektischen Zusammensetzung angewendet werden.

Damit wird eine Kombination aus enantiomerer Anreicherung und bevorzugter Kristallisation vorgeschlagen, was eine Rückführung und damit weitere Aufarbeitung des alternierend zum reinen Enantiomer anfallenden Racemats erlaubt. Daneben wird aus Lösungsmittel getrennt, was vor allem für zur Zersetzung bei höheren Temperaturen neigende organische Substanzen von Bedeutung ist.

Es wird damit ausgenutzt, dass, falls im chiralen System eine vorgeschaltete enantiomere Anreicherung erfolgt ist, das angereicherte Enantiomer und die racemische Verbindung separat kristallisieren können (im Halbdiagramm Enantiomer - Racemat gibt es ein Eutektikum). In zyklischer Betriebsweise gewinnt man dieses Enantiomer und die racemische Verbindung, wobei letztere durch die Prozesskoppelung in die Anreicherung rückgeführt wird. Bei Anreicherung des anderen Enantiomers liefert die bevorzugte Kristallisation dieses Enantiomer und die racemische Verbindung. Ein entsprechendes gekoppeltes Verfahren kann dann beide Enantiomere liefern, wobei keine Restmutterlaugen anfallen.

Sämtliche in den Anmeldungsunterlagen offenbarten Merkmale werden als erfindungswesentlich beansprucht, sofern sie einzeln oder in Kombination gegenüber dem Stand der Technik neu sind.

**Bezugszeichenliste**

| | |
|---|---|
| 1, 2 | Versuchsdurchgang |
| 11 | Trajektorie |
| 13, 14, 18 | Zweiphasengebiete |
| 15 | eutektische Linie |
| 17 | Löslichkeitsisotherme |
| 17a, 17b, 17c | Löslichkeitsisothermen (Fig. 5 + Fig. 6) |
| 21, 22 | Dreiphasengebiete |
| 34, 35 | Zweiphasengebiete |
| 36 | Dreiphasengebiet |
| M | Punkt maximaler Löslichkeit |
| Tₖ | Kristallisationstemperatur |
| T_{GG} | Gleichgewichtstemperatur |
| A, B, C, D | Prozesspunkte |
| A1, B1, C1, D1 | Prozesspunkte (Fig. 5 + Fig. 6) |
| A2, B2, C2, D2 | Prozesspunkte (Fig. 6) |
| ΔT | Unterkühlung |

## Patentansprüche

1. Verfahren zur Racemattrennung bei verbindungsbildenden Stoffsystemen mit den Schritten:
- Erzeugung wenigstens einer mit einem Enantiomer angereicherten Fraktion aus einem Racemat
- Durchführung einer bevorzugten Kristallisation an der Fraktion,
wobei die jeweils angereicherte Fraktion mit dem entsprechenden Enantlomer geimpft wird oder
die jeweils angereicherte Fraktion mit dem Racemat geimpft wird.

2. Verfahren nach Anspruch 1,
**dadurch gekennzeichnet, dass**
die angereicherte Fraktion aus einer racemischen Mischung erzeugt wird.

3. Verfahren nach wenigstens einem der vorangegangenen Ansprüche,
**dadurch gekennzeichnet, dass**
das nach der bevorzugten Kristallisation gewonnene Enantiomer abgetrennt wird.

4. Verfahren nach wenigstens einem der vorangegangenen Ansprüche,
**dadurch gekennzeichnet, dass**
die Erzeugung der angereicherten Fraktion durch ein chromatographisches Verfahren erfolgt.

5. Verfahren nach wenigstens einem der vorangegangenen Ansprüche,
**dadurch gekennzeichnet, dass**
die Erzeugung der angereicherten Fraktion unter Einsatz einer enantioselektiven Membran erfolgt.

6. Verfahren nach wenigstens einem der vorangegangenen Ansprüche,
**dadurch gekennzeichnet, dass**
die Erzeugung der angereicherten Fraktion unter Einsatz von supramolekularen Komplexen erfolgt.

7. Verfahren nach wenigstens einem der vorangegangenen Ansprüche,
**dadurch gekennzeichnet, dass**
entstehendes Racemat wieder der ursprünglichen Ausgangslösung zugeführt wird.

8. Verfahren nach wenigstens einem der vorangegangenen Ansprüche,
**dadurch gekennzeichnet, dass**
die bevorzugte Kristallisation abgebrochen wird, bevor die Keimbildung der jeweils unerwünschten Komponente auftritt.

9. Verfahren nach wenigstens einem der vorangegangenen Ansprüche,
**dadurch gekennzeichnet, dass**
im Wesentlichen abwechselnd das Enantiomer E1 oder E2 und das Racemat gewonnen wird.

10. Verfahren nach wenigstens einem der vorangegangenen Ansprüche,
**dadurch gekennzeichnet, dass**
wenigstens einzelne Verfahrensschritte und insbesondere die bevorzugte Kristallisation vorzugsweise kontinuierlich überwacht werden.

11. Verfahren nach Anspruch 10,
**dadurch gekennzeichnet, dass**
die Überwachung der einzelnen Verfahrensschritte durch ein Verfahren erfolgt, das aus einer Gruppe von Verfahren ausgewählt ist, welche polarimetrische Messungen, Dichtemessungen, refraktrometrische Messungen und dergleichen sowie Kombinationen hieraus enthält.

## Claims

1. Method for racemate separation in compound-forming substance systems, comprising the steps:
- generating of at least one fraction which is enriched with an enantiomer from a racemate,
- performing a preferred crystallisation on the fraction, whereby the respectively enriched fraction is seeded with the corresponding enantiomer or the respectively enriched fraction is seeded with the racemate.

2. Method according to claim 1, **characterised in that** the enriched fraction is produced from a racemic mixture.

3. Method according to at least one of the preceding claims, **characterised in that** the enantiomer obtained after the preferred crystallisation is separated out.

4. Method according to at least one of the preceding claims, **characterised in that** the enriched fraction is produced by a chromatographic method.

5. Method according to at least one of the preceding claims, **characterised in that** the enriched fraction is produced using an enantioselective membrane.

6. Method according to at least one of the preceding claims, **characterised in that** the enriched fraction is produced using supramolecular complexes.

7. Method according to at least one of the preceding claims, **characterised in that** the resulting racemate is passed back to the original starting solution.

8. Method according to at least one of the preceding claims, **characterised in that** the preferred crystallisation is stopped before the nucleation of the respectively undesired component occurs.

9. Method according to at least one of the preceding claims, **characterised in that** the enantiomer E1 or E2 and the racemate are obtained in an essentially alternating manner.

10. Method according to at least one of the preceding claims, **characterised in that** at least individual method steps and in particular the preferred crystallisation are monitored in a preferably continuous manner.

11. Method according to claim 10, **characterised in that** the individual method steps are monitored by a method selected from a group of methods comprising polarimetric measurements, density measurements, refractometric measurements and the like and also combinations thereof.

## Revendications

1. Procédé pour la séparation des racémiques dans des systèmes de substances formant des composés, comprenant les étapes de :
- production, à partir d'un racémique, d'au moins une fraction enrichie d'un énantiomère,
- réalisation d'une cristallisation préférée sur la fraction,
chaque fraction enrichie étant inoculée avec l'énantiomère correspondant, ou chaque fraction enrichie étant inoculée avec le racémique.

2. Procédé selon la revendication 1, **caractérisé en ce que** la fraction enrichie est produite à partir d'un mélange racémique.

3. Procédé selon au moins l'une des revendications précédentes, **caractérisé en ce qu'**on sépare l'énantiomère obtenu après la cristallisation préférée.

4. Procédé selon au moins l'une des revendications précédentes, **caractérisé en ce que** la production de la fraction enrichie a lieu par un procédé chromatographique.

5. Procédé selon au moins l'une des revendications précédentes, **caractérisé en ce que** la production de la fraction enrichie a lieu par l'utilisation d'une membrane énantiosélective.

6. Procédé selon au moins l'une des revendications précédentes, **caractérisé en ce que** la production de la fraction enrichie a lieu par l'utilisation de complexes supramoléculaires.

7. Procédé selon au moins l'une des revendications précédentes, **caractérisé en ce que** le racémique obtenu est renvoyé à la solution initiale de départ.

8. Procédé selon au moins l'une des revendications précédentes, **caractérisé en ce que** la cristallisation préférée est interrompue avant que se produise la nucléation de chaque composant indésirable.

9. Procédé selon au moins l'une des revendications précédentes, **caractérisé en ce que** l'énantiomère E1 ou E2 et le racémique sont obtenus essentiellement en alternance.

10. Procédé selon au moins l'une des revendications précédentes, **caractérisé en ce qu'**au moins des étapes individuelles du procédé, et en particulier la cristallisation préférée, sont surveillées de préférence en continu.

11. Procédé selon la revendication 10, **caractérisé en ce que** la surveillance des étapes individuelles du procédé a lieu par un procédé, qui est choisi dans un groupe de procédés, qui contient les mesures polarimétriques, les mesures densitométriques, les mesures réfractométriques et analogues, ainsi que les combinaisons de ces dernières.
